(19) Europäisches Patentamt
European Patent Office
Office européen des brevets

(11) Veröffentlichungsnummer: **0 012 909**
**B1**

(12) # EUROPÄISCHE PATENTSCHRIFT

(45) Veröffentlichungstag der Patentschrift: **15.06.83**

(51) Int. Cl.³: **C 07 F 9/65**, C 23 F 11/16, C 09 C 3/08, B 01 F 17/32, C 10 M 1/46

(21) Anmeldenummer: **79105051.1**

(22) Anmeldetag: **10.12.79**

(54) **Neue Benzimidazolyl-2-alkan-phosphonsäuren und deren Salze, ein Verfahren zu ihrer Herstellung und ihre Verwendung als Korrosionsschutzmittel oder Netzmittel.**

(30) Priorität: **22.12.78 DE 2855659**

(43) Veröffentlichungstag der Anmeldung: **09.07.80 Patentblatt 80/14**

(45) Bekanntmachung des Hinweises auf die Patenterteilung: **15.06.83 Patentblatt 83/24**

(84) Benannte Vertragsstaaten: **AT BE DE FR GB IT NL**

(56) Entgegenhaltungen:
**DE-A-2 206 933 US-A-3 720 498**
**DE-A-2 307 519 US-A-3 888 627**
**Chemical Abstracts Band 70, Nr. 5 3. Februar 1969 Columbus, Ohio, USA A. I. RAZUMOV et al. »Phosphonic and phosphonous acid derivatives. XLIII. Some transformations of phosphorylated acetals« Seite 2009, Spalte 1 bis Spalte 2, Abstract Nr. 20160a**
**Chemical Abstracts Band 68, Nr. 9, 26. Februar 1968 Columbus, Ohio, USA A. I. RAZUMOV et al. »Phosphonic and phosphonous acid derivatives. XLV. Synthesis and some properties of phosphorylated benzimidazoles« Seite 3869, Spalte 2 Abstract Nr. 39731t**

(73) Patentinhaber: **BAYER AG, Zentralbereich Patente, Marken und Lizenzen, D-5090 Leverkusen 1, Bayerwerk (DE)**

(72) Erfinder: **Botta, Artur, Dr., Buschstrasse 149, D-4150 Krefeld (DE)**
Erfinder: **Rother, Heinz-Joachim, Dr., Breslauer Strasse 31, D-4150 Krefeld (DE)**
Erfinder: **Teichmann, Günther, Dr., Kruse Bömke 3, D-4150 Krefeld (DE)**

**EP 0 012 909 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Neue Benzimidazolyl-2-alkan-phosphonsäuren und deren Salze, ein Verfahren zu ihrer Herstellung und ihre Verwendung als Korrosionsschutzmittel oder Netzmittel

Die Erfindung betrifft neue Benzimidazolyl-2-alkanphosphonsäuren und deren entsprechende Salze, ein Verfahren zu ihrer Herstellung und ihre Verwendung als Korrosionsschutzmittel oder Netzmittel.

Aus der US 3 720 498 sind Imidazoline und Amidine bekannt, die durch eine Phosphonsäuregruppe substituiert sind. Sie können auch als Korrosionsschutzmittel verwendet werden. Die aus der US 3 720 498 bekannten Imidazoline sind nicht hydrolysestabil und verändern bei der Anwendung nachteilig die Oberfläche der zu schützenden Metalle.

Es wurden neue Benzimidazolyl-2-alkan-phosphonsäuren der Formel

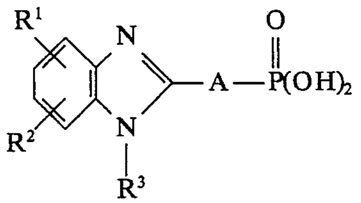

(I)

worin

| | |
|---|---|
| $R^1$ und $R^2$ | gleich oder verschieden sind und Wasserstoff, Niederalkyl, Phenyl, Halogen, Trifluormethyl, Nitro, Niederalkoxy bedeuten oder gemeinsam einen ankondensierten Benzolring bilden, |
| $R_3$ | Wasserstoff, Niederalkyl oder gegebenenfalls durch Niederalkyl oder Halogen substituiertes Phenyl oder Benzyl bedeutet, und |
| A | einen geradkettigen oder verzweigten, gesättigten oder ungesättigten bivalenten Kohlenwasserstoffrest mit 1 bis 15 Kohlenstoffatomen Cyclohexylen oder Cyclopentylen bedeutet, die gegebenenfalls durch Phenyl, Tolyl, Ethylphenyl, Xylyl, Chlorphenyl, Carboxy und/oder Phosphono substituiert sein können, |

und deren Salze mit anorganischen oder organischen Basen und Säuren gefunden.

Niederalkylreste für das erfindungsgemäße Verfahren können geradkettige oder verzweigte Kohlenwasserstoffreste mit bevorzugt 1 bis 6 Kohlenstoffatomen sein.

Beispielsweise seien genannt:

Methyl, Äthyl, Propyl, Isopropyl, Butyl, Isobutyl, tert.-Butyl, Pentyl, Isopentyl, Hexyl und Isohexyl.

Halogenreste für das erfindungsgemäße Verfahren können Fluor, Chlor, Brom oder Jod, bevorzugt Fluor und Chlor, sein.

Niederalkoxyreste für das erfindungsgemäße Verfahren können einen geradkettigen oder verzweigten Kohlenwasserstoffrest mit bevorzugt 1 bis 6 Kohlenstoffatomen, insbesondere 1 bis 2 Kohlenstoffatomen enthalten.

Beispielsweise seien genannt:

Methoxy, Äthoxy, Propoxy, Isopropoxy, Butoxy, Isobutoxy, Pentoxy, Isopentoxy, Hexoxy und Isohexoxy.

Falls $R^1$ und $R^2$ gemeinsam einen an den aromatischen Kern des Benzimidazolylrestes ankondensierten Benzolring bilden, erhält man einen Naphthimidazolylrest.

A für das erfindungsgemäße Verfahren kann ein geradkettiger oder verzweigter, gesättigter oder ungesättigter bivalenter Kohlenwasserstoffrest mit 1 bis 15, bevorzugt mit 1 bis 12, insbesondere mit 1 bis 6 Kohlenstoffatomen Cyclohexylen oder Cyclopentylen sein.

Beispielsweise sei genannt:

Methylen, Äthylen, Vinylen, Propylen, Butylen, Butenylen, Pentylen, Hexylen, Hexenylen, Heptylen, Octylen, Decylen, Dodecylen.

Die Salze der Benzimidazolyl-2-alkan-phosphonsäuren sind ebenfalls neu. Als solche seien beispielsweise die Verbindungen genannt, die durch Umsetzung der erfindungsgemäßen Benzimidazolyl-2-alkan-phosphonsäuren mit basischen Verbindungen oder mit Säuren entstehen. Als basische Verbindungen seien beispielsweise die Alkali- und Erdalkalihydroxide oder -oxide, Ammoniak oder Amine genannt. Als mehrbasische Säuren können die erfindungsgemäßen Benzimidazolyl-2-alkan-phosphonsäuren mit basischen Verbindungen die entsprechenden Salze

bilden.

Bevorzugte Salze sind z. B. die

Natrium-, Kalium-, Magnesium-, Calcium-, Zink-, Chrom- und Molybdän-, Ammonium-, Niederalkylammonium-, Diniederalkylammonium-, Triniederalkylammoniumsalze.

Als Säuren seien z. B. Mineralsäuren wie Salzsäure, Schwefelsäure, Salpetersäure oder Phosphorsäure oder starke organische Säuren wie Trifluoressigsäure, Methansulfonsäure, Benzolsulfonsäure oder Toluolsulfonsäure genannt.

Bevorzugte Salze sind z. B. die Sulfate, Phosphate und Sulfonate.

Die neuen erfindungsgemäßen Benzimidazolyl-2-alkan-phosphonsäuren können in ihren möglichen tautomeren Formen vorliegen. So können sie als zwitterionische Verbindungen beispielsweise auch der allgemeinen Formel

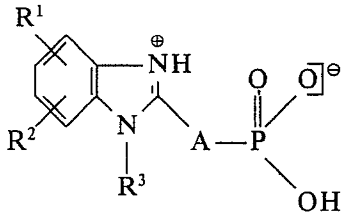

(Ia)

entsprechen. Der Einfachheit halber sollen sie jedoch in der Folge durch die allgemeine Formel I charakterisiert werden.

Als bevorzugte neue Benzimidazolyl-2-alkan-phosphonsäuren seien Verbindungen der Formel

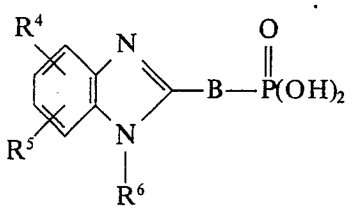

(II)

worin

$R^4$ und $R^5$ gleich oder verschieden sind und Wasserstoff, Methyl, Chlor, Methoxy oder Nitro,
$R^6$ Wasserstoff, Methyl, Benzyl, Phenyl und
B Methylen, Äthylen, Propylen, Butylen, Vinylen, Phenylvinylen, Carboxyäthylen, Carboxypropylen, Dicarboxypropylen, Dicarboxybutylen, Phosphonpropylen, Phosphonobutylen, Carboxyphosphonobutylen bedeuten,

genannt.

Im einzelnen seien beispielsweise die folgenden Benzimidazolyl-2-alkan-phosphonsäuren genannt:

Benzimidazolyl-methanphosphonsäure, -äthanphosphonsäure,
-vinylphosphonsäure, -propanphosphonsäure, -carboxyäthanphosphonsäure,
-β-styrylphosphonsäure, -1-carboxy-1-carboxymethyl-propanphosphonsäure,
-3-carboxy-butan-1,3-diphosphonsäure,
1-Methylbenzimidazolyl-äthanphosphonsäure;
1-Phenylbenzimidazolyl-, 1-Benzylbenzimidazolyl-, 5-Methylbenzimidazolyl-,
5-Chlorbenzimidazolyl-, 4,6-Dimethylbenzimidazolyl-,
4(5)-Methylbenzimidazolyl-methanphosphonsäure;
5-Nitrobenzimidazolyl-, 5-Methoxybenzimidazolyl-,
4(5)-Methyl-benzimidazolyläthanphosphonsäure.

Es wurde weiterhin ein Verfahren zur Herstellung der neuen Benzimidazolyl-2-alkan-phosphonsäuren gefunden, das dadurch gekennzeichnet ist, daß man o-Arylendiamine der Formel

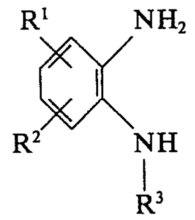

(III)

worin

$R^1$, $R^2$, $R^3$ die obengenannte Bedeutung haben

mit Phosphonocarbonsäureverbindungen der Formel

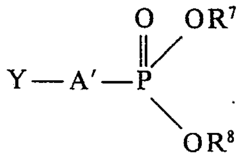

(IV)

worin

Y Carboxy, Carbalkoxy, Carbphenoxy, Cyano, Carbamid oder Carbochlorid bedeutet,
$R^7$ und $R^8$ gleich oder verschieden sind und Wasserstoff, Niederalkyl oder Phenyl bedeuten oder gemeinsam über eine Ethylen- oder Propylenbrücke einen Ring bilden können, und
A' einen geradkettigen oder verzweigten, gesättigten oder ungesättigten bivalenten Kohlenwasserstoffrest mit 1 bis 15 Kohlenstoffatomen, Cyclohexylen oder Cyclopentylen bedeutet, die gegebenenfalls durch Phenyl, Tolyl, Ethylphenyl, Xylyl, Chlorphenyl, durch Y oder die Gruppe

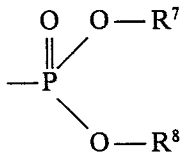

substituiert sein können, worin Y, $R^7$ und $R^8$ die oben genannte Bedeutung haben

in Gegenwart einer Säure umsetzt.

Das erfindungsgemäße Verfahren kann beispielsweise anhand der folgenden Reaktionsgleichung erläutert werden:

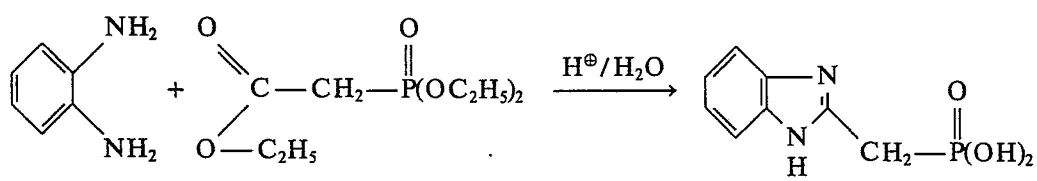


Carbalkoxygruppen für das erfindungsgemäße Verfahren sind Carbonsäureestergruppen, deren aliphatischer Teil aus einem geradkettigen oder verzweigten Kohlenwasserstoffrest, bevorzugt aus einem Niederalkylrest mit 1 bis 6, insbesondere 1 bis 2, Kohlenstoffatomen besteht.

Bevorzugte o-Arylendiamine für das erfindungsgemäße Verfahren sind Verbindungen der Formel

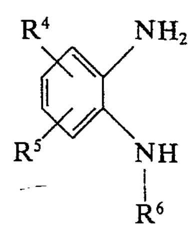

(V)

worin

$R^4$, $R^5$ und $R^6$ die oben angeführte Bedeutung besitzen.

o-Arylendiamine sind bekannt und können beispielsweise durch Umsetzung von o-Nitrochlorbenzolen mit Ammoniak oder primären Aminen und nachfolgende Reduktion hergestellt werden.
Beispielsweise seien die folgenden o-Arylendiamine genannt:

o-Phenylendiamin, 2,3- und 3,4-Diamino-toluol, -äthylbenzol, -propylbenzol, -cumol, -isopropenylbenzol, -butylbenzol, -isobutylbenzol, -tert.-butylbenzol, -octylbenzol, -diphenyl, -chlorbenzol, -brombenzol, Trifluormethylbenzol, -fluorbenzol, -nitrobenzol, -methoxybenzol, -butoxybenzol, 1,2-Diamino-3,4-xylol, 1,2-Diamino-3,5-xylol, 1,2-Diamino-3-äthyl-6-methylbenzol, 1,2-Diamino-3,4,6-trimethylbenzol, 2,3-Diamino-5-chlortoluol, 1,2-Diamino-3,5-dichlorbenzol, 1,2-Diamino-3,4,5-trichlorbenzol, 3,4-Diamino-6-nitrotoluol, 3,4-Diamino-5-chloranisol, 2,3-Diamino-5-trifluormethylchlorbenzol, 1,2- und 2,3-Diaminonaphthalin,

sowie gegebenenfalls deren (Isomeren)gemische.
Bevorzugte Phosphonocarbonsäurederivate für das erfindungsgemäße Verfahren sind Verbindungen der Formel

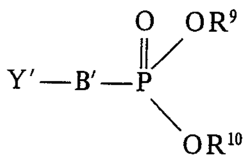

(VI)

worin

Y' Carboxy, Carbalkoxy und Cyano,
B' Methylen, Äthylen, Propylen, Butylen, Vinylen, Phenylvinylen, Carboxy-, Carbalkoxy- und Cyanoäthylen und -propylen, Dicarboxy-, Dicarbalkoxy-und Dicyano-propylen und -butylen, Carboxy-, Carbalkoxy- oder Cyano-phosphono- oder Dialkoxyphosphono-butylen, und
$R^9$ und $R^{10}$ gleich oder verschieden sind und Wasserstoff oder Niederalkyl, insbesondere Methyl und Äthyl,

bedeuten.
Phosphonocarbonsäurederivate für das erfindungsgemäße Verfahren sind bekannt: G. M. Kosolapoff, Organophosphorus Compounds, New York, John Wiley u. Sons, Inc., (1950) 121 ff; G. M. Kosolapoff and L. Meier, Organic Phosphorus Compounds, Vol. 7, Chapter 18, »Phosphonic Acids and Derivates«, John Wiley and Sons, New York (1976); Houben-Weyl, Methoden der Organischen Chemie, Bd. XII/1, Organische Phosphorverbindungen, S. 348 ff, und DE-OS 2 015 068; DE-OS 2 333 151; DE-OS 2 333 353; DE-OS 2 602 030; JP-PS 077 807 (9.7.1974); DE-OS 2 621 604; DE-OS 2 621 605 und können beispielsweise durch Umsetzung von Halogenalkylcarbonsäureverbindungen mit Trialkylphosphiten oder durch Addition von Dialkylphosphiten an ($\alpha,\beta$)-ungesättigte Carbonsäurederivate hergestellt werden.
Beispielsweise seien die folgenden Phosphonocarbonsäureverbindungen genannt:

Phosphono-essigsäure, -propionsäure, -buttersäure, -isobuttersäure, -pivalinsäure, -valeriansäure, -isovaleriansäure, -capronsäure, -isocapronsäure, -oenanthsäure, -caprylsäure, -caprinsäure, -laurinsäure, -stearinsäure, -acrylsäure, -methacrylsäure, -crotonsäure, -allylessigsäure, -hexensäure, -undecensäure, -zimtsäure, -chlorozimtsäure, -methylzimtsäure, -cyclopentancarbonsäure, -cyclohexancarbonsäure, -phenylessigsäure, -chlorphenylessigsäure, -dihydrozimtsäure, -methyldihydrozimtsäure, -phenylpropionsäure, -chlorphenylbuttersäure, -phenylacrylsäure, -malonsäure, -methylmalonsäure, -maleinsäure, -fumarsäure, -bernsteinsäure, -äthylbernsteinsäure, -dimethylbernsteinsäure, -allylbernsteinsäure, -butylbernsteinsäure, -benzylbernsteinsäure, -phenylbernsteinsäure, -glutarsäure, -methylglutarsäure, -dimethylglutarsäure, -methylphenylglutarsäure, -adipinsäure, -trimethyladipinsäure, -pimelinsäure, -äthantricarbonsäure, -propantricarbonsäure, -butantricarbonsäure, -pentantricarbonsäure, -hexantricarbonsäure, -heptantricarbonsäure.

Diphosphono-buttersäure, -valeriansäure, -isovaleriansäure, -capronsäure, -isocapronsäure, -pimelinsäure, -butandicarbonsäure, -pentandicarbonsäure.

Triphosphonopentancarbonsäure sowie die gegebenenfalls gemischten Nitrile, Amide, Chloride oder Ester, wie Methyl-, Äthyl-, Propyl-, Butyl- oder Phenylester, der Phosphono-, Diphosphono- und Triphosphono-carbonsäuren.

Das erfindungsgemäße Verfahren kann auch ohne Mitverwendung von zusätzlichen Säuren durchgeführt werden, insbesondere dann, wenn die Ausgangsverbindungen der Formel (IV) selbst Phosphonsäurereste enthalten. In der Regel werden jedoch für das Verfahren gemäß der Erfindung Säuren eingesetzt. Als solche seien beliebige, insbesondere starke Protonensäuren, genannt, mit Ausnahme solcher, beispielsweise Carbonsäuren, die mit den Ausgangsstoffen der Formel (III) zu Benzimidazolen reagieren können.

Beispielsweise seien Mineralsäuren, wie Salzsäure, Bromwasserstoffsäure, Schwefelsäure, Phosphorsäure und/oder Salpetersäure oder organische Säuren, wie Phosphonsäuren oder Sulfonsäuren, wie Methansulfonsäure, Benzolsulfonsäure, oder Toluolsulfonsäure, genannt. Die Säuren können einzeln oder im Gemisch, vorzugsweise in wäßriger Lösung eingesetzt werden.

Die Konzentration der Säuren im Reaktionsgemisch ist in weiten Grenzen variabel und richtet sich nach deren Art, Eigenschaften, Löslichkeit. Im allgemeinen setzt man die Säure in 5 bis 90 Gew.-%, vorzugsweise in 10 bis 50 Gew.-% der Reaktionslösung ein.

Das erfindungsgemäße Verfahren kann im allgemeinen im Temperaturbereich von 50 bis 200° C, vorzugsweise von 80 bis 120° C, durchgeführt werden. Im allgemeinen arbeitet man unter Normaldruck. Es ist jedoch auch möglich, das erfindungsgemäße Verfahren bei einem Unter- oder einem Überdruck durchzuführen.

Die Arbeitsweise für das erfindungsgemäße Verfahren kann sowohl diskontinuierlich als auch kontinuierlich sein.

Im allgemeinen setzt man die Ausgangsverbindungen im annähernd stöchiometrischen Verhältnis miteinander um; es kann jedoch auch von Vorteil sein, das o-Arylendiamin oder die Phosphoncarbonsäure im Überschuß, beispielsweise von 5 bis 50%, vorzugsweise 10 bis 25%, einzusetzen.

Die Menge der wäßrigen Säure im Reaktionsmedium kann in weiten Grenzen schwanken und richtet sich im wesentlichen nach Art der Säure, Löslichkeit der Ausgangs- und Endprodukte sowie Reaktivität der Ausgangsstoffe. Im allgemeinen setzt man in das erfindungsgemäße Verfahren 0,5 bis 5 Gew.-Teile Säure, bevorzugt 1 bis 3 Gew.-Teile Säure, bezogen auf das o-Arylendiamin ein. Im allgemeinen mischt man die Ausgangsstoffe mit der wäßrigen Säure bei Raumtemperatur und erwärmt unter einem Schutzgas, beispielsweise Stickstoff oder einem Edelgas, zur Reaktionstemperatur. Es ist aber auch möglich, eine der beiden Ausgangsverbindungen zu der Lösung oder Suspension der anderen bei Reaktionstemperatur oder beide bei der Reaktionstemperatur in das Reaktionsmedium einzutragen.

Die Aufarbeitung, Isolierung und Reinigung der nach dem erfindungsgemäßen Verfahren hergestellten Benzimidazolyl-2-alkan-phosphonsäuren erfolgt in üblicher Weise, beispielsweise durch Neutralisation des Reaktionsgemisches bis zum isoelektrischen Punkt der Benzimidazolylphosphonsäuren, Absaugen, Umkristallisation oder Umfällung.

Es wurde außerdem gefunden, daß die Benzimidazolyl-2-alkan-phosphonsäuren und deren Salze eine ausgeprägte korrosionsinhibierende Wirkung haben und als Korrosionsinhibitoren verwendet werden können. Zur Korrosionsinhibition können sie einzeln, untereinander kombiniert oder zusammen mit anderen bekannten Korrosionsinhibitoren, wie beispielsweise Natriumbenzoat, Natriumcinnamat, Natriumnitrit, Natriumnitrat, Borax, Alkaliphosphaten, -molybdaten, -chromaten, -silikaten, Alkanolaminen oder Zinkverbindungen eingesetzt werden. Die erfindungsgemäßen Verbindungen werden zur Korrosionsinhibition im allgemeinen wäßrigen, wäßrig-alkoholischen, alkoholischen und/oder ölhaltigen Medien zugesetzt; beispielsweise können sie eingesetzt werden als Korrosionsinhibitoren in Wärmeträgern von Kühl- oder Heizkreisläufen, Kühlschmierstoffen, Motorölen oder Sparbeizen. Durch Zusatz der erfindungsgemäßen Stoffe der Formel (I) und/oder deren Salze zu den genannten Medien oder Kreislaufflüssigkeiten wird die Korrosion von Metallen, insbesondere von Kupfer und dessen Legierungen, verhindert.

Die anzuwendende Inhibitorkonzentration hängt von dem zu inhibierenden System ab. Im allgemeinen werden die erfindungsgemäßen Korrosionsinhibitoren in Konzentrationen von 0,0001 bis 0,3 Gew.-%, bevorzugt von 0,001 bis 0,05 Gew.-%, bezogen auf die Gesamtmenge des zu inhibierenden Mediums, eingesetzt.

Gegenüber bekannten Korrosionsinhibitoren, wie organischen Mercaptoverbindungen oder Triazolderivaten, haben die erfindungsgemäßen Benzimidazolyl-2-alkan-phosphonsäuren beispielsweise folgende Vorteile:

Beständigkeit und Wirksamkeit über einen breiten pH-Bereich; Stabilität gegenüber Oxidation, vornehmlich gegen Oxidation durch Luftssauerstoff; gute thermische Stabilität; Beständigkeit gegen Hydrolyse; leichte Löslichkeit, insbesondere in wäßrigen basischen Medien, die beispielsweise als Kreislaufflüssigkeiten in Verbrennungskraftmaschinen verwendet werden.

Im Vergleich zu den aus der US 3 720 498 bekannten Verbindungen haben die erfindungsgemäßen Verbindungen eine höhere Stabilität und verändern die Oberfläche der zu schützenden Metalle kaum.

Die neuen Benzimidazolylalkanphosphonsäuren bzw. ihre Alkalisalze eignen sich gut als Netzmittel bei der Herstellung von hochkonzentrierten wäßrigen Pigment- und Füllstoffaufschlämmungen. Unter hochkonzentriert wird dabei im allgemeinen ein Feststoffgehalt je nach eingesetztem Pigment oberhalb etwa 45 Gew.-%, bezogen auf das Suspensionsgewicht verstanden. Derartige Pigment- bzw. Füllstoffaufschlämmungen werden vielfach auch als Slurries bezeichnet (DE-OS 2 237 791, 2 233 517, 2 135 535, 2 045 141, 1 810 042, 2 044 510 und 2 611 768).

Die Vorteile bei der Verarbeitung dieser Slurries gegenüber dem pulverförmigen Pigment und Füllstoff sind in den vorstehend zitierten Offenlegungsschriften ausführlich beschrieben worden.

Die Zudosierung der erfindungsgemäß zu verwendenden Verbindungen zu den Pigmenten und Füllstoffen bereitet keine Schwierigkeiten, da sie in verdünnten Laugen (NaOH, KOH, $NH_4OH$ usw.) löslich sind. Sie können daher entweder dem Wasser zugesetzt werden, in dem das Pigment dispergiert werden soll oder auch bereits beim Herstellungsprozeß auf die Oberfläche des Pigments aufgebracht werden, z. B. vor oder während der Endmahlung in einer Stift-, Kugel-, Pendel- oder Strahlmühle.

In einer besonders bevorzugten Ausführungsform können schlecht transportierbare Filterkuchen mit relativ hohem Festkörpergehalt (25 bis 60%) durch Zusatz der erfindungsgemäßen Verbindungen »verflüssigt« und in dieser Form leicht (z. B. durch Pumpen) transportiert werden, beispielsweise in eine nachfolgende Trocknungs- oder Calcinierungsanlage.

Die Stelle im Produktionsgang des Pigmentes oder Füllstoffes, an der die erfindungsgemäß verwendeten Verbindungen zugefügt werden, ist nicht von entscheidender Bedeutung.

Die Zusatzmenge selbst beträgt je nach Pigment oder Füllstoff 0,02 bis 2, vorzugsweise 0,1 bis 1 Gew.-% der erfindungsgemäßen Substanzen, bezogen auf den Feststoff.

Beispiel 1

In die siedende Lösung von 259 g (2,4 Mol) o-Phenylendiamin in 1000 g $H_2O$ und 1000 g konzentrierter Salzsäure läßt man unter Stickstoffüberleitung unter Rühren 534 g (2,22 Mol) 3-Phosphonopropionsäuretriäthylester innerhalb 30 Minuten einlaufen und hält noch 15 bis 20 Stunden bei Rückflußtemperatur. Nach Erkalten löst man durch vorsichtige Zugabe (Kühlen!) von 1200 g 45%iger Natronlauge und ca. 500 bis 1000 ml $H_2O$ um und schüttelt die braune Lösung mit Methylenchlorid mehrfach aus, bis die Methylenchloridphase farblos bleibt. Anschließend wird die wäßrige Phase unter Verwendung von reichlich Aktivkohle 30 Minuten zum Rückfluß erhitzt und nach Filtration mit Salzsäure auf pH 4,5 eingestellt: helle bis bräunliche Kristalle. Man saugt ab, schlämmt die Kristalle mehrfach mit warmem Wasser auf, saugt ab und wäscht mit Wasser chloridfrei. Beim Einengen der Mutterlaugen und Waschwässer im Vakuum erhält man weiteres Material, das auf die gleiche Weise gereinigt wird. Nach Trocknen im Vakuum über $P_2O_5$ gewinnt man 405 g (80,4% der Theorie) an 2-[Benzimidazolyl-(2)]-äthanphosphonsäure als hellbeige bis farbloses, bis 300° C nicht schmelzendes Pulver.

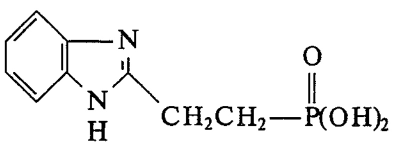

| | | | | |
|---|---|---|---|---|
| Ber. | C 47,8, | H 4,90, | N 12,39, | P 13,70, |
| Gef. | C 47,5, | H 4,88, | N 12,60, | P 14,05. |

Beispiel 2

905 g (4,0 Mol) Phosphonessigsäuretriäthylester läßt man bei Stickstoffüberleitung und Rühren innerhalb von 30 Minuten in die siedende Lösung von 472 g (4,2 Mol) o-Phenylendiamin in 3200 g halbkonzentrierter Salzsäure einlaufen und hält noch 18 Stunden bei Rückflußtemperatur. Nach Erkalten alkalisiert man vorsichtig mit 3200 g 25%iger Natronlauge, schüttelt die Lösung 3mal mit je ca. 700 ml $CH_2Cl_2$ aus, kocht dann die wäßrige Phase 30 Minuten mit Aktivkohle auf und stellt nach Filtration die helle klare Lösung mit konz. HCl auf pH 5 ein. Die ausgefallenen Kristalle werden abgesaugt und durch mehrfaches Aufschlämmen in lauwarmem Wasser Cl-frei gewaschen. Nach Trocknen im Trockenschrank über $P_2O_2$ erhält man 553 g (65% der Theorie) an Benzimidazolyl-(2)-methanphosphonsäure, hellbeige bis farbloses, bis 300° C nicht schmelzendes Pulver.

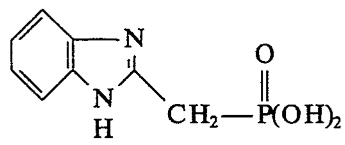

| | | | | |
|---|---|---|---|---|
| Ber. | C 45,29, | H 4,28, | N 13,21, | P 14,60, |
| Gef. | C 45,55, | H 4,32, | N 13,55, | P 14,95. |

Beispiel 3

Die Mischung aus 200 g $H_2O$, 200 g konz. $H_2SO_4$, 60 g (0,55 Mol) o-Phenylendiamin und 113,1 g (0,5 Mol) Phosphonessigsäuretriäthylester hält man unter Stickstoffüberleitung 25 Stunden bei Rückflußtemperatur, alkalisiert die Lösung nach Erkalten durch Zugabe von 500 g 40%iger Natronlauge unter Verdünnen mit ca. 1500 ml Wasser und arbeitet, wie in Beispiel 2 beschrieben, weiter auf. Man erhält 76 g (71,5%) an Benzimidazolyl-(2)-methanphosphonsäure.

Beispiel 4

165 g $H_2O$, 235 g 85% $H_3PO_4$, 60 g (0,55 Mol) o-Phenylendiamin und 113,1 g (0,5 Mol) Phosphonoessigsäuretriäthylester werden gemischt und unter Stickstoffüberleitung 48 Stunden zum Rückfluß erhitzt. Alkalisiert man nach Erkalten die dunkle Lösung mit ca. 250 g konzentriertem Ammoniak und 100 ml $H_2O$ und arbeitet analog Beispiel 2 auf, so erhält man 71 g (66,8% der Theorie) an Benzimidazolyl-(2)-methanphosphonsäure.

Beispiel 5

95,6 g (0,5 Mol) Phosphonopropionsäurenitrildiäthylester, 60 g (0,55 Mol) o-Phenylendiamin, 350 g konz. HCl und 200 g $H_2O$ werden unter Stickstoffüberleitung 16 Stunden zum Rückfluß erhitzt. Danach fügt man Aktivkohle zu der dunklen Lösung zu, hält noch 30 Minuten bei Rückfluß, filtriert und stellt die hellrötliche Lösung mit ca. 250 g 45%iger Natronlauge auf pH 3 ein. Die grauen bis farblosen Kristalle an 2-[Benzimidazolyl-(2)]-äthanphosphonsäure werden abgesaugt und durch mehrfache Aufschlämmung mit Wasser und Absaugen $Cl^-$-frei gewaschen, nach Trocknen 92,2 g (85% der Theorie).

Beispiel 6

226,2 g (1 Mol) Phosphonessigsäuretriäthylester, 220 g (1,05 Mol) 4,5-Diamino-1,3-dimethylbenzol-dihydrochlorid (97%ig), 400 g $H_2O$ und 300 g konz. HCl werden analog Beispiel 2 miteinander umgesetzt. Man erhält 195 g (81% der Theorie) an 4,6-Dimethylbenzimidazolyl-(2)-methanphosphonsäure, hellbräunliche Kristalle, die unter 300° C nicht schmelzen.

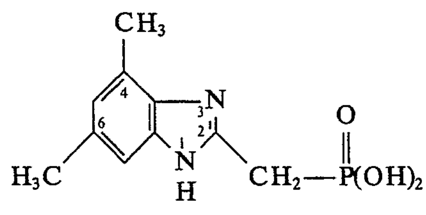

| | | | | |
|---|---|---|---|---|
| Ber. | C 50,0, | H 5,46, | N 11,66, | P 12,89, |
| Gef. | C 50,0, | H 5,81, | N 11,5, | P 12,7. |

Folgende Verbindungen wurden analog Beispiel 2 hergestellt:

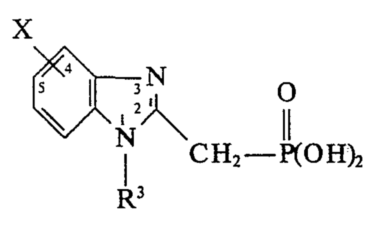

| Beispiel | Ausgangsstoff | X | $R^3$ | Fp | Ausbeute (%) |
|---|---|---|---|---|---|
| 7 | 3,4-Diaminotoluol | 5-$CH_3$ | H | – | 55,7 |
| 8 | 4-Chlor-1,2-diaminobenzol | 5-Cl | H | – | 71,3 |
| 9 | o-Toluylendiamin*) (Isomerengemisch ca. 1 : 1) | 4(5)-$CH_3$ | H | – | 53,5 |
| 10 | N-Benzyl-o-phenylendiamin | H | $CH_2C_6H_5$ | – | 61,7 |
| 11 | N-Phenyl-o-phenylendiamin | H | $C_6H_5$ | – | 32 |

Folgende Verbindungen wurden analog Beispiel 1 unter Verwendung von 3-Phosphonopropionsäuretrimethylester anstelle des -triäthylesters hergestellt:

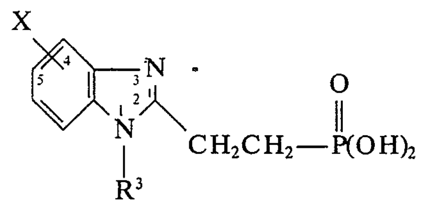

| Beispiel | Ausgangsstoff | X | $R^3$ | Fp | Ausbeute (%) |
|---|---|---|---|---|---|
| 12 | N-Methyl-o-phenylendiamin | H | $CH_3$ | 228°C**) | 62 |
| 13 | 4-Nitro-1,2-diaminobenzol | 5-$NO_2$ | H | – | 33,5 |
| 14 | 4-Methoxy-1,2-diaminobenzol | 5-$OCH_3$ | H | – | 59 |
| 15 | o-Toluylendiamin*) (Isomerengemisch ca. 1 : 1) | 4(5)-$CH_3$ | H | 280°C Zers. | 82,7 |

*) 2,3- und 3,4-Diaminotoluol.
**) 4 Teile $H_2O$.

## Beispiel 16

Setzt man 110 g (0,43 Mol) 4-Phosphonobuttersäuretriäthylester und 48,6 g (0,45 Mol) o-Phenylendiamin entsprechend Beispiel 1 in 200 g konz. HCl und 200 g $H_2O$ miteinander um, so erhält man 52,5 g (51,5%) an 3-[Benzimidazolyl-(2)]-propanphosphonsäure, hellgraue Kristalle vom Fp. ca. 280° C Zers.

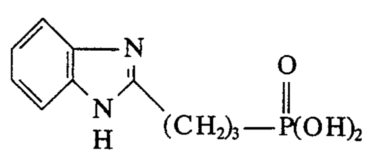

Ber. C 50,00, H 5,46, N 11,66, P 12,89,
Gef. C 50,30, H 5,17, N 11,75, P 13,20.

Beispiel 17

86,5 g (0,80 Mol) o-Phenylendiamin werden mit 167 g (0,75 Mol) Diäthylphosphonacrylsäuremethylester, entsprechend Beispiel 1, in 600 g halbkonzentrierter Salzsäure umgesetzt. Die Ausbeute an 2-[Benzimidazolyl-(2)]-vinylphosphonsäure, beige bis farblose nicht schmelzende Kristalle, beträgt 75,8% der Theorie (128 g).

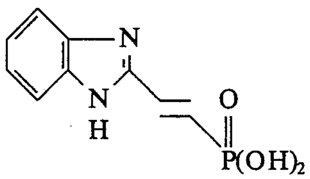

| | | | | |
|---|---|---|---|---|
| Ber. | C 48,22, | H 4,05, | N 12,50, | P 13,82, |
| Gef. | C 48,30, | H 4,35, | N 12,45, | P 14,12. |

Gemäß der Verfahrensweise von Beispiel 1 werden unter Verwendung von 3-Dimethylphosphonobuttersäureäthylester folgende Verbindungen erhalten:

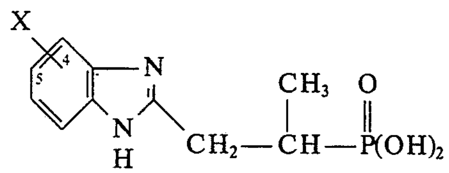

| Beispiel | Ausgangsstoffe | X | Fp | Ausbeute (%) |
|---|---|---|---|---|
| 18 | 2,3-Diaminotoluol | 4-$CH_3$ | – | 69,7 |
| 19 | o-Toluylendiamin (Isomerengemisch ca. 1 : 1) | 4(5)-$CH_3$ | – | 61,3 |

Gemäß der Verfahrensweise von Beispiel 1 werden unter Verwendung von Dimethylphosphonobernsteinsäurediäthylester folgende Verbindungen erhalten:

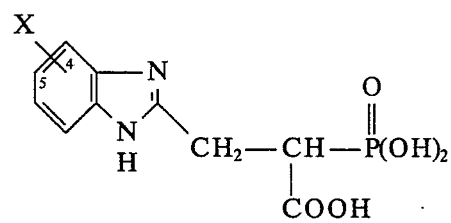

| Beispiel | Ausgangsstoffe | X | Fp | Ausbeute (%) |
|---|---|---|---|---|
| 20 | o-Phenylendiamin | H | – | 73,4 |
| 21 | 3,4-Diaminotoluol | 5-$CH_3$ | – | 61,7 |

Beispiel 22

Setzt man analog Beispiel 1 78 g (0,25 Mol) 2-Phosphonozimtsäuretriäthylester mit 32,5 g (0,3 Mol) o-Phenylendiamin in 300 g halbkonzentrierter Salzsäure um, so erhält man 25 g (33,3% der Theorie) an $\beta$-[Benzimidazolyl-(2)]-$\beta$-styrolphosphonsäure, beige nicht schmelzende Kristalle.

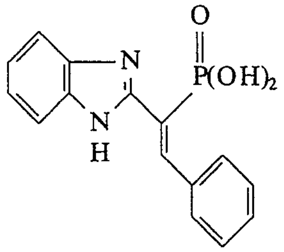

Ber. C 60,00, H 4,36, N 9,33, P 10,32,
Gef. C 58,99, H 4,59, N 9,59, P 10,80.

Beispiel 23

40,5 g (0,375 Mol) o-Phenylendiamin, 271,2 g (0,5 Mol) 2-Phosphonobutan-1,2,4-tricarbonsäure (50%ig in Wasser) und 100 ml Wasser werden 30 Stunden unter Stickstoff am Rückfluß erhitzt. Nach Erkalten saugt man die ausgeschiedenen Kristalle ab und kristallisiert aus 15 Teilen Wasser unter Zusatz von Aktivkohle um. Man erhält 63,5 g (49,6% der Theorie) an 3-[Benzimidazolyl-(2)]-1-carboxy-1-carboxymethyl-propanphosphonsäure, farblose nicht schmelzende Kristalle.

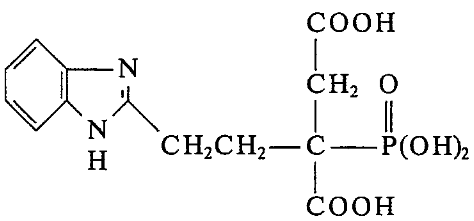

Ber. C 45,45, H 4,38, N 8,20, P 9,05,
Gef. C 45,10, H 4,13, N 8,37, P 9,35.

Die Struktur der Verbindung wurde durch Kernresonanzmessungen gesichert.

Beispiel 24

Verfahrensweise analog Beispiel 23 durch 7 h Erhitzen zum Rückfluß unter Stickstoff von 306 g (0,5 Mol) 2-Phosphono-2-(2-phosphonoäthyl)-bernsteinsäure (50%ig in Wasser), 54 g (0,5 Mol) o-Phenylendiamin und 100 ml Wasser. Die grauen Kristalle werden abgesaugt, in 1000 ml Wasser aufgenommen, mit wenig verdünntem NaOH zur Lösung gebracht, mit Aktivkohle aufgekocht, filtriert. Nach Ansäuern des Filtrates mit verdünntem $H_2SO_4$ auf pH 2 fallen hellrötliche Kristalle aus, die abgesaugt und mit Wasser gewaschen werden. Beim Einengen der Mutterlaugen und Waschwässer erhält man noch weitere Kristalle. Nach Trocknen beträgt die Ausbeute an 4-Benzimidazolyl-(2)-3-carboxy-butan-1,3-diphosphonsäure 141 g (74,5% der Theorie).

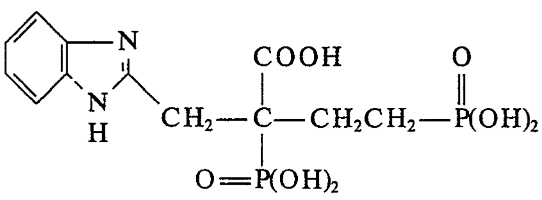

Ber. C 38,11, H 4,26, N 7,41, P 16,38,
Gef. C 37,7, H 5,05, N 7,34, P 16,45.

Die Struktur der Verbindung wurde durch Kernresonanzmessungen gesichert.

## Anwendungsbeispiele

### Beispiel 25

### Prüfung als Korrosionsinhibitor

Als Prüflinge wurden 65 x 23 x 2 mm blank gebeizte und entfettete Kupferbleche verwendet; als Testlösung diente künstliches Meerwasser nach ASTM D 665-IP 135, welchem der jeweils zu prüfende Korrosionsinhibitor zugegeben wurde. Während der Versuchsdauer von 7,5 Stunden befanden sich die Prüflinge vollkommen eingetaucht in der 55° C warmen Testlösung, in die ca. 100 ml Luft/min eingeleitet wurde.

Nach dem Test wurden die Prüflinge 15 Sekunden lang in halbkonzentrierter Salzsäure gereinigt und mit Wasser und Aceton gewaschen. Vor und nach dem Versuch wurden die trockenen Prüflinge gewogen. Die so erhaltenen Massenverluste, bezogen auf die Fläche $m^2$ sowie das Aussehen der Prüflinge und der Testlösungen nach den Versuchen sind in der Tabelle I aufgeführt.

Tabelle I

| Korrosionsinhibitor | Anwendungskonzentration in ppm | Flächenbezogener Massenverlust in $g/m^2$ | Aussehen nach dem Test der Prüflinge | Aussehen nach dem Test der Testlösung |
|---|---|---|---|---|
| Ohne | – | 3,25 | stark korrodiert | starke Kupfersalz-Fällung |
| 1-Carboxy-2-[5-methylbenzimidazolyl-(2)]-äthanphosphonsäure (Beispiel 21) | 50 | 0,66 | geringe dunkle Anlauffarbe | klar |
| 2-[5-Nitrobenzimidazolyl-(2)]-äthanphosphonsäure (Beispiel 13) | 50 | 0,36 | geringe dunkle Anlauffarbe | klar |
| 2-[Benzimidazolyl-(2)]-1-carboxy-äthanphosphonsäure (Beispiel 20) | 50 | 0,93 | geringe dunkle Anlauffarbe | Spur Kupfersalz-Fällung |
| 2-[4(5)-Methylbenzimidazolyl-(2)]-äthanphosphonsäure (Beispiel 15) | 50 | 0,69 | geringe dunkle Anlauffarbe | Spur Kupfersalz-Fällung |
| [5-Chlorbenzimidazolyl-(2)]-methan-phosphonsäure (Beispiel 8) | 50 | 0,27 | geringe dunkle Anlauffarbe | klar |
| 3-[Benzimidazolyl-(2)]-propan-phosphonsäure (Beispiel 16) | 50 | 0,72 | geringe dunkle Anlauffarbe | Spur Kupfersalz-Fällung |

Ergänzung zu Tabelle I

Vergleich mit der US 3 720 498

| Korrosionsinhibitor | Anwendungskonzentration in ppm | Flächenbezogener Massenverlust in $g/m^2$ | Aussehen nach dem Test der Prüflinge | Aussehen nach dem Test der Testlösung |
|---|---|---|---|---|
| US 3 720 498 Beispiel 1 | 50 | 7,53 | starke Anlauffarbe | starke Kupfersalzfällung |
| US 3 720 498 Beispiel 2 | 50 | 3,18 | starke Anlauffarbe | starke Kupfersalzfällung |

## Beispiel 26

### Herstellung einer fließfähigen lagerstabilen hochkonzentrierten wäßrigen Titandioxidaufschlämmung mit Hilfe von Benzimidazolylalkanphosphonsäuren

Als Pigment wurde ein Handelsprodukt, ein unbehandelter Anatas mit 99% $TiO_2$-Gehalt, eingesetzt. Das Pigment ist gut dispergierbar aufgrund der durchgeführten Raymond-Mahlung.

Die bei der Slurry-Herstellung eingesetzten Hilfs- bzw. Netzmittelmengen betrugen 0,3% der erfindungsgemäßen Substanzen, bezogen auf das $TiO_2$-Pigment.

Als Vergleichsprobe wurde eine Slurry ohne jeglichen Netzmittelzusatz hergestellt und eine weitere mit 0,3% Polyphosphat (A), einen für diese Anwendungsgebiete weit verbreiteten Hilfsstoff.

Die Herstellung der Slurries erfolgte, indem zunächst das Hilfs- bzw. Netzmittel als 10%ige alkalische Lösung vorgelegt wurde (z. B. 2,16 g). Um eine Beeinflussung durch die hohe Härte des zur Verfügung stehenden Leitungswassers zu vermeiden, wurde nur mit destilliertem Wasser gearbeitet. Anschließend wird mit Wasser aufgefüllt entsprechend dem später gewünschten Festkörpergehalt (z. B. 28,00 g minus 2,16 g = 25,84 g). Anschließend wird unter Rühren die abgewogene Menge Pigment zugegeben (z. B. 72 g). Danach wird die gesamte Aufschlämmung bei möglichst hoher Umdrehungszahl mit Hilfe eines Dissolvers ca. 15 Minuten dispergiert.

Die gemessenen Viskositäten sollen dann bei möglichst hohem Festkörpergehalt möglichst niedrig sein. Die Viskositäten [Pascal · Sekunden, abgekürzt Pa · sec] werden mit Hilfe eines Rotationsviskosimeters bestimmt, wenn möglich bei gleicher oder bei der jeweils höchstmöglichen Schergeschwindigkeit $D[s^{-1}]$. Die Messungen erfolgen nach 1 Tag und nach etwa 2- bis 3wöchiger Lagerung.

Für eine gute Slurry ist es wichtig, daß nicht nur die Viskositäten möglichst konstant bleiben, sondern daß sich möglichst wenig Bodensatz während der Lagerzeit von ca. 2 bis 3 Wochen bildet bzw. daß ein Bodensatz leicht wieder aufrührbar ist. Diese Prüfung erfolgte durch Rühren der Slurries mit einem Spatel per Hand. Deutliche Unterschiede im Lagerstabilitätsverhalten lassen sich mit dieser relativ groben Methode aber schnell und gut feststellen.

Die Ergebnisse sind der Tabelle II zu entnehmen.

Im Vergleich zur Nullprobe, ohne Netzmittel, zeigen die erfindungsgemäßen Substanzen ihre gute Eignung durch einen höheren Festkörpergehalt bei einer gleichzeitig niedrigeren Viskosität. In bezug auf das Vergleichsnetzmittel ist die Lagerstabilität (Viskosität, Bodensatz, Verarbeitbarkeit) der mit den erfindungsgemäßen Substanzen hergestellten Slurries deutlich besser.

## Beispiel 27

### Herstellung einer fließfähigen, lagerstabilen hochkonzentrierten wäßrigen $TiO_2$-Aufschlämmung

Die Herstellung und Messung der Slurries erfolgte wie unter Beispiel 26 beschrieben.

Als Pigment wurde wieder ein Handelsprodukt, ein unbehandeltes Anataspigment mit 99% $TiO_2$-Gehalt eingesetzt. Im Unterschied zu den im Beispiel 26 verwendeten Anataspigment zeichnet sich dieses Pigment infolge einer Dampfstrahlmahlung durch eine besonders gute Dispergierbarkeit aus.

Die Ergebnisse sind der Tabelle III zu entnehmen. Im Vergleich zur Nullprobe haben die Slurries mit den Netzmitteln einen höheren Festkörpergehalt. Die Aufschlämmungen mit den erfindungsgemäßen Substanzen verhalten sich in der Lagerstabilität günstiger als die Aufschlämmung mit Polyphosphat (A).

## Beispiel 28

### Herstellung einer fließfähigen, lagerstabilen hochkonzentrierten wäßrigen Eisenoxidgelb-Aufschlämmung

Als Pigment wurde ein Handelsprodukt, ein Eisenoxidgelbpigment ($\alpha FeOOH$) mit einem $Fe_2O_3$-Gehalt von 86% und der vorherrschenden Teilchengröße der nadelförmigen Primärteilchen von $0{,}1 \times 0{,}7$ µm eingesetzt.

Als Vergleichsslurries wurden neben der Nullprobe Slurries mit Polyphosphat (A) und Aminotrimethylenphosphonsäure (B) hergestellt.

Die Herstellung und Messung der Slurries erfolgte wie unter Beispiel 26 beschrieben.

Die Ergebnisse sind der Tabelle IV zu entnehmen.

Bei diesem schwer »zu verflüssigenden« Pigment (aufgrund der Nadelstruktur der Primärteilchen) sind die Unterschiede zwischen der Nullprobe und den Slurries mit Netzmitteln geringer als in den Beispielen 26 und 27. Die erfindungsgemäßen Substanzen sind im Lagerverhalten günstiger als die Vergleichssubstanzen A und B.

## Beispiel 29

### Herstellung einer fließfähigen lagerstabilen hochkonzentrierten wäßrigen Eisenoxidschwarz-Aufschlämmung

Als Pigment wurde ein Handelsprodukt, ein Eisenoxidschwarzpigment ($FE_3O_4$) mit 94% $Fe_2O_3$ eingesetzt. Als Vergleichsslurries wurden neben der Nullprobe Aufschlämmungen mit Polyphosphat (A) und 2-Aminophosphonbutantricarbonsäure-1,2,4 (C) eingesetzt.

Herstellung und Prüfung der Slurries erfolgte gemäß Beispiel 26.

Die Ergebnisse sind in Tabelle V zusammengefaßt.

Mit den erfindungsgemäßen Substanzen und den Vergleichsnetzmitteln lassen sich Slurries mit einem Festkörpergehalt von 65% herstellen (Nullprobe nur 60%). Alle Slurries sind gut lagerstabil. Die zum Vergleich herangezogenen Netzmittel und die erfindungsgemäßen Substanzen verhalten sich gleich gut.

## Beispiel 30

### Herstellung einer fließfähigen lagerstabilen hochkonzentrierten wäßrigen $TiO_2$-Aufschlämmung

Herstellung und Prüfung der Slurries erfolgte wie unter Beispiel 26 angegeben.

Die Ergebnisse sind der Tabelle VI zu entnehmen.

Als Vergleichsslurries wurden neben der Nullprobe wieder die vorstehend aufgeführten Netzmittel A, B und C eingesetzt.

Die erfindungsgemäßen Substanzen und die anderen Netzmittel ergeben im Vergleich zu der Nullprobe Slurries mit deutlich höheren Festkörpergehalten.

Tabelle II

| Netzmittel | % | FK | Viskosität nach 1 Tag D[$s^{-1}$] | Pa · sec | 10 Tagen D[$s^{-1}$] | Pa · sec | Allgemeines Aussehen nach 10 Tagen |
|---|---|---|---|---|---|---|---|
| – | – | 65 | 98,3 | 13,1 | 98,3 | 13,2 | pastös, noch verarbeitbar |
| A | 0,3 | 72 | 79,37 | 19,5 | nm | | fest, nicht mehr verarbeitbar |
| Beispiel 20 | 0,3 | 72 | 137,1 | 1,9 | 59,2 | 4,3 | |
| Beispiel 21 | 0,3 | 72 | 137,1 | 1,3 | 137,1 | 1,9 | schwach struk- strukturviskos, nach leichtem Rühren sofort flüssig gut verarbeitbar |

FK = Festkörper [%].

nm = nicht meßbar infolge zu hoher Viskosität oder eines nicht mehr aufrührbaren, festen Bodensatzes.

Tabelle III

| Netzmittel | % | FK | Viskosität nach 1 Tag D[$s^{-1}$]Pa · sec | | 14 Tagen D[$s^{-1}$]Pa · sec | | Allgemeines Aussehen nach 14 Tagen |
|---|---|---|---|---|---|---|---|
| – | – | 65 | 43,35 | 0,09 | 43,35 | 0,09 | strukturviskos, gut verarbeitbar |
| A | 0,3 | 72 | nm | | nm | | fest, nicht mehr verarbeitbar |
| Beispiel 8 | 0,3 | 72 | 42,45 | 12,1 | 42,45 | 12,7 | pastös, noch verarbeitbar |
| Beispiel 9 | 0,3 | 72 | 42,45 | 15,8 | 42,45 | 16,7 | pastös, noch verarbeitbar |

Tabelle IV

| Netzmittel | % | FK | Viskosität nach 1 Tag D[$s^{-1}$]Pa · sec | | 14 Tagen D[$s^{-1}$]Pa · sec | | Allgemeines Aussehen nach 14 Tagen |
|---|---|---|---|---|---|---|---|
| – | – | –8 | 98,3 | 6,4 | 98,3 | 5,6 | pastös, verarbeitbar |
| A | 0,3 | 50 | nm | | nm | | |
| B | 0,3 | 50 | 111,2 | 0,02 | nm | | |
| Beispiel 21 | 0,3 | 50 | 103,9 | 1,4 | 98,3 | 3,2 | pastös, verarbeitbar |
| Beispiel 9 | 0,3 | 50 | 98,3 | 4,4 | 98,3 | 4,4 | pastös, verarbeitbar |
| Beispiel 15 | 0,3 | 50 | 98,3 | 6,2 | 98,3 | 4,3 | pastös, verarbeitbar |
| Beispiel 8 | 0,3 | 50 | 103,9 | 1,1 | 103,9 | 1,3 | leicht pastös, verarbeitbar |

Tabelle V

| Netzmittel | % | FK | Viskosität nach 1 Tag D[s$^{-1}$] | Pa · sec | 14 Tagen D[s$^{-1}$] | Pa · sec | Allgemeines Aussehen nach 14 Tagen |
|---|---|---|---|---|---|---|---|
| – | – | 60 | 103,9 | 1,1 | 98,3 | 1,4 | leicht pastös, verarbeitbar |
| A | 0,3 | 65 | 98,3 | 2,5 | 98,3 | 2,7 | leicht pastös, verarbeitbar |
| C | 0,3 | 65 | 103,9 | 1,6 | 98,3 | 2,0 | leicht pastös, verarbeitbar |
| Beispiel 9 | 0,3 | 65 | 98,3 | 2,4 | 98,3 | 2,6 | leicht pastös, verarbeitbar |
| Beispiel 21 | 0,3 | 65 | 103,9 | 1,7 | 98,3 | 1,7 | leicht pastös, verarbeitbar |

Tabelle VI

| Netzmittel | % | FK | Viskosität nach 1 Tag D[s$^{-1}$] | Pa · sec | 14 Tagen D[s$^{-1}$] | Pa · sec | Allgemeines Aussehen nach 14 Tagen |
|---|---|---|---|---|---|---|---|
| – | – | 63 | 103,9 | 2,1 | 98,3 | 3,0 | leicht pastös, verarbeitbar |
| A | 0,3 | 72 | 111,2 | 0,09 | 111,2 | 0,14 | strukturviskos; nach Rühren sofort flüssig, gut verarbeitbar |
| B | 0,3 | 72 | 111,2 | 0,05 | 111,2 | 0,08 | strukturviskos; nach Rühren sofort flüssig, gut verarbeitbar |
| C | 0,3 | 72 | 111,2 | 0,03 | 111,2 | 0,03 | flüssig, gut verarbeitbar |
| Beispiel 8 | 0,3 | 72 | 103,9 | 0,31 | 103,9 | 0,93 | dickflüssig, verarbeitbar |
| Beispiel 7 | 0,3 | 72 | 103,9 | 0,83 | 103,9 | 1,42 | dickflüssig, verarbeitbar |
| Beispiel 17 | 0,3 | 72 | 103,9 | 0,82 | 103,9 | 1,17 | dickflüssig, verarbeitbar |

**Patentansprüche für die Vertragsstaaten: BE, DE, FR, GB, IT, NL**

1. Benzimidazolyl-2-alkan-phosphonsäuren der Formel

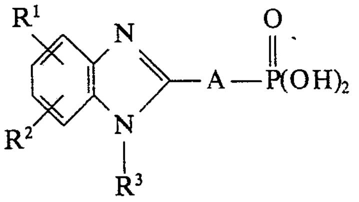

worin

| | |
|---|---|
| $R^1$ und $R^2$ | gleich oder verschieden sind und Wasserstoff, Niederalkyl, Phenyl, Halogen, Trifluormethyl, Nitro, Niederalkoxy bedeuten oder gemeinsam einen ankondensierten Benzolring bilden, |
| $R^3$ | Wasserstoff, Niederalkyl oder gegebenenfalls durch Niederalkyl oder Halogen substituiertes Phenyl oder Benzyl bedeutet, und |
| A | einen geradkettigen oder verzweigten, gesättigten oder ungesättigten bivalenten Kohlenwasserstoffrest mit 1 bis 15 Kohlenstoffatomen, Cyclohexylen oder Cyclopentylen bedeutet, die gegebenenfalls durch Phenyl, Tolyl, Ethylphenyl, Xylyl, Chlorphenyl, Carboxy und/oder Phosphono substituiert sein können, |

und deren Salze mit anorganischen oder organischen Basen und Säuren.

2. Benzimidazolyl-2-alkan-phosphonsäuren nach Anspruch 1, gekennzeichnet durch die Formel

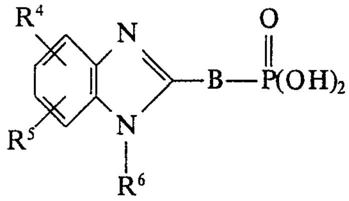

worin

| | |
|---|---|
| $R^4$ und $R^5$ | gleich oder verschieden sind und Wasserstoff, Methyl, Chlor, Methoxy oder Nitro, |
| $R^6$ | Wasserstoff, Methyl, Benzyl, Phenyl und |
| B | Methylen, Ethylen, Propylen, Butylen, Vinylen, Phenylvinylen, Carboxyethylen, Carboxypropylen, Dicarboxypropylen, Dicarboxybutylen, Phosphonopropylen, Phosphonobutylen, Carboxyphosphonobutylen |

bedeuten.

3. Verfahren zur Herstellung von Benzimidazolyl-2-alkan-phosphonsäuren nach Anspruch 1, dadurch gekennzeichnet, daß man o-Arylendiamine der Formel

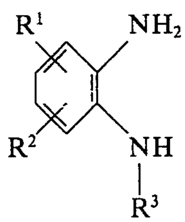

worin

| | |
|---|---|
| $R^1$, $R^2$, $R^3$ | die in Anspruch 1 genannte Bedeutung haben |

mit Phosphonocarbonsäureverbindungen der Formel

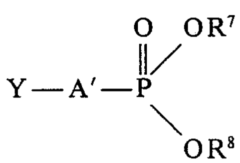

worin

| | |
|---|---|
| Y | Carboxy, Carbalkoxy, Carbphenoxy, Cyano, Carbamid oder Carbochlorid bedeutet, |
| $R^7$ und $R^8$ | gleich oder verschieden sind und Wasserstoff, Niederalkyl oder Phenyl bedeuten oder gemeinsam über eine Ethylen- oder Propylenbrücke einen Ring bilden können, und |
| A' | einen geradkettigen oder verzweigten, gesättigten oder ungesättigten bivalenten Kohlenwasserstoffrest mit 1 bis 15 Kohlenstoffatomen, Cyclohexylen oder Cyclopentylen bedeutet, die gegebenenfalls durch Phenyl, Tolyl, Ethylphenyl, Xylyl, Chlorphenyl, durch Y und/oder die Gruppe |

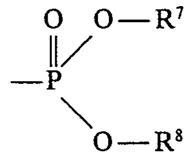

substituiert sein können, worin Y, $R^7$ und $R^8$ die oben genannte Bedeutung haben

in Gegenwart einer Säure umsetzt.

4. Verfahren nach Anspruch 3, dadurch gekennzeichnet, daß es in Gegenwart einer wäßrigen Protonensäure durchgeführt wird.

5. Verfahren nach den Ansprüchen 3 und 4, dadurch gekennzeichnet, daß die Konzentration an Säure im Reaktionsgemisch von 5 bis 90 Gew.-% beträgt.

6. Verfahren nach den Ansprüchen 3 bis 5, dadurch gekennzeichnet, daß die Umsetzung im Temperaturbereich von 50 bis 200° C durchgeführt wird.

7. Korrosionsschutzmittel, enthaltend Benzimidazolyl-2-alkan-phosphonsäuren und/oder deren Salze nach Anspruch 1.

8. Netzmittel für die Herstellung von wäßrigen Pigment- und Füllstoffaufschlämmungen, enthaltend Benzimidazolyl-2-alkan-phosphonsäuren und/oder deren Salze nach Anspruch 1.

9. Verwendung von Benzimidazolyl-2-alkan-phosphonsäuren und/oder deren Salze nach Anspruch 1 in Korrosionsschutzmitteln.

10. Verwendung von Benzimidazolyl-2-alkan-phosphonsäuren und/oder deren Salze nach Anspruch 1 in Netzmitteln für die Herstellung von wäßrigen Pigment- und Füllstoffaufschlämmungen.

**Patentansprüche für den Vertragsstaat: AT**

1. Verfahren zur Herstellung von Benzimidazolyl-2-alkan-phosphonsäuren der Formel

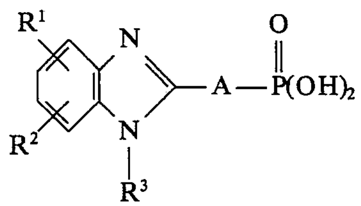

worin

$R^1$ und $R^2$ gleich oder verschieden sind und Wasserstoff, Niederalkyl, Phenyl, Halogen, Trifluormethyl, Nitro, Niederalkoxy bedeuten oder gemeinsam einen ankondensierten Benzolring bilden,

$R^3$ Wasserstoff, Niederalkyl oder gegebenenfalls durch Niederalkyl oder Halogen substituiertes Phenyl oder Benzyl bedeutet, und

A einen geradkettigen oder verzweigten, gesättigten oder ungesättigten bivalenten Kohlenwasserstoffrest mit 1 bis 15 Kohlenstoffatomen, Cyclohexylen oder Cyclopentylen bedeutet, die gegebenenfalls durch Phenyl, Tolyl, Ethylphenyl, Xylyl, Chlorphenyl, Carboxy und/oder Phosphono substituiert sein können,

oder deren Salze mit anorganischen oder organischen Basen und Säuren, dadurch gekennzeichnet, daß man o-Arylendiamine der Formel

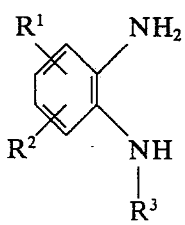

worin

$R^1$, $R^2$, $R^3$ die obengenannte Bedeutung haben

mit Phosphonocarbonsäureverbindungen der Formel

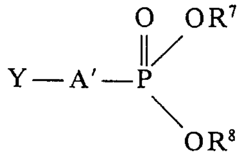

worin

Y Carboxy, Carbalkoxy, Carbphenoxy, Cyano, Carbamid oder Carbochlorid bedeutet,

$R^7$ und $R^8$ gleich oder verschieden sind und Wasserstoff, Niederalkyl oder Phenyl bedeuten oder gemeinsam über eine Ethylen- oder Propylenbrücke einen Ring bilden können, und

A' einen geradkettigen oder verzweigten, gesättigten oder ungesättigten bivalenten Kohlenwasserstoffrest mit 1 bis 15 Kohlenwasserstoffatomen, Cyclohexylen oder Cyclopentylen bedeutet, die gegebenenfalls durch Phenyl, Tolyl, Ethylphenyl, Xylyl, Chlorphenyl,
durch Y und/oder die Gruppe

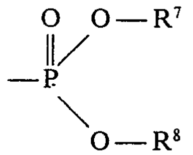

substituiert sein können, worin Y, $R^7$ und $R^8$ die oben genannte Bedeutung haben

in Gegenwart einer Säure umsetzt.

2. Verfahren nach Anspruch 1, dadurch gekennzeichnet, daß es in Gegenwart einer wäßrigen Protonensäure durchgeführt wird.

3. Verfahren nach den Ansprüchen 1 und 2, dadurch gekennzeichnet, daß die Konzentration an Säure im Reaktionsgemisch von 5 bis 90 Gew.-% beträgt.

4. Verfahren nach den Ansprüchen 1 bis 3, dadurch gekennzeichnet, daß die Umsetzung im Temperaturbereich von 50 bis 200° C durchgeführt wird.

5. Verwendung von Benzimidazolyl-2-alkan-phosphonsäuren und/oder deren Salze nach Anspruch 1 in Korrosionsschutzmitteln.

6. Verwendung von Benzimidazolyl-2-alkan-phosphonsäuren und/oder deren Salze nach Anspruch 1 in Netzmitteln für die Herstellung von wäßrigen Pigment- und Füllstoffaufschlämmungen.

**Claims for the Convention states: BE, DE, FR, GB, IT, NL**

1. Benzimidazolyl-2-alkane-phosphonic acids of the formula

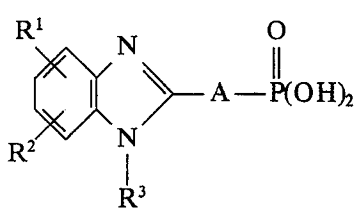

wherein

$R^1$ and $R^2$ are identical or different and denote hydrogen, lower alkyl, phenyl, halogen, trifluoromethyl, nitro or lower alkoxy, or together form a fused-on benzene ring,

$R^3$ denotes hydrogen, lower alkyl or phenyl or benzyl which is optionally substituted by lower alkyl or halogen and

A denotes a straight-chain or branched, saturated or unsaturated bivalent hydrocarbon radical with 1 to 15 carbon atoms, cyclohexylene or cyclopentylene, which can optionally be substituted by phenyl, tolyl, ethylphenyl, xylyl, chlorophenyl, carboxyl and/or phosphono,

and their salts with inorganic or organic bases and acids.

2. Benzimidazolyl-2-alkane-phosphonic acids according to Claim 1, characterised by the formula

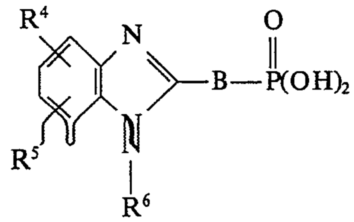

wherein

| | |
|---|---|
| $R^4$ and $R^5$ | are identical or different and denote hydrogen, methyl, chlorine, methoxy or nitro, |
| $R^6$ | denotes hydrogen, methyl, benzyl or phenyl and |
| B | denotes methylene, ethylene, propylene, butylene, vinylene, phenylvinylene, carboxyethylene, carboxypropylene, dicarboxypropylene, dicarboxybutylene, phosphonopropylene, phosphonobutylene or carboxyphosphonobutylene. |

3. Process for the preparation of benzimidazolyl-2-alkane-phosphonic acids according to Claim 1, characterised in that o-arylenediamines of the formula

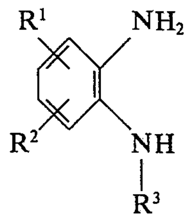

wherein

$R^1$, $R^2$ and $R^3$ have the meaning given in Claim 1,

are reacted with phosphonocarboxylic acid compounds of the formula

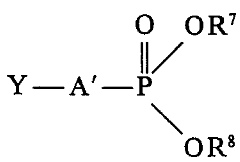

wherein

| | |
|---|---|
| Y | denotes carboxyl, carbalkoxy, carbophenoxy, cyano, carbamido or carbochloride, |
| $R^7$ and $R^8$ | are identical or different and denote hydrogen, lower alkyl or phenyl, or together can form a ring, by means of an ethylene or propylene bridge, and |
| A' | denotes a straight-chain or branched, saturated or unsaturated bivalent hydrocarbon radical with 1 to 15 carbon atoms, cyclohexylene or cyclopentylene, which can optionally be substituted by phenyl, tolyl, ethylphenyl, xylyl, chlorophenyl, or by Y and/or the group |

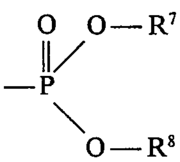

wherein Y, $R^7$ and $R^8$ have the abovementioned meaning,

in the presence of an acid.

4. Process according to Claim 3, characterised in that it is carried out in the presence of an aqueous proton acid.

5. Process according to Claims 3 and 4, characterised in that the concentration of acid in the reaction mixture is 5 to 90% by weight.

6. Process according to Claims 3 to 5, characterised in that the reaction is carried out in the

temperature range from 50 to 200° C.

7. Anti-corrosion agents containing benzimidazolyl-2-alkane-phosphonic acids and/or salts thereof according to Claim 1.

8. Wetting agents for the preparation of aqueous suspensions of pigments and fillers, containing benzimidazolyl-2-alkane-phosphonic acids and/or salts thereof according to Claim 1.

9. Use of benzimidazolyl-2-alkane-phosphonic acids and/or salts thereof according to Claim 1 in anti-corrosion agents.

10. Use of benzimidazolyl-2-alkane-phosphonic acids and/or salts thereof according to Claim 1 in wetting agents for the preparation of aqueous suspensions of pigments and fillers.

**Claims for the Convention state: AT**

1. Process for the preparation of benzimidazolyl-2-alkane-phosphonic acids of the formula

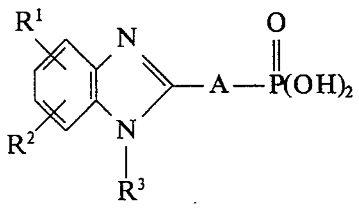

wherein

| | |
|---|---|
| $R^1$ and $R^2$ | are identical or different and denote hydrogen, lower alkyl, phenyl, halogen, trifluoromethyl, nitro or lower alkoxy, or together form a fused-on benzene ring, |
| $R^3$ | denotes hydrogen, lower alkyl or phenyl or benzyl which is optionally substituted by lower alkyl or halogen and |
| A | denotes a straight-chain or branched, saturated or unsaturated bivalent hydrocarbon radical with 1 to 15 carbon atoms, cyclohexylene or cyclopentylene, which can optionally be substituted by phenyl, tolyl, ethylphenyl, xylyl, chlorophenyl, carboxyl and/or phosphono, |

or their salts with inorganic or organic bases and acids, characterised in that o-arylenediamines of the formula

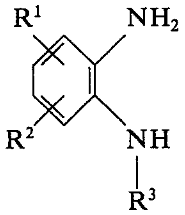

wherein

$R^1$, $R^2$ and $R^3$ have the abovementioned meaning,

are reacted with phosphonocarboxylic acid compounds of the formula

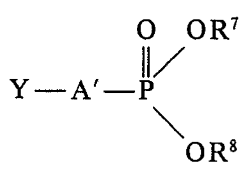

wherein

| | |
|---|---|
| Y | denotes carboxyl, carbalkoxy, carbophenoxy, cyano, carbamido or carbochloride, |
| $R^7$ and $R^8$ | are identical or different and denote hydrogen, lower alkyl or phenyl, or together can form a ring, by means of an ethylene or propylene bridge, and |
| A' | denotes a straight-chain or branched, saturated or unsaturated bivalent hydrocarbon radical with 1 to 15 carbon atoms, cyclohexylene or cyclopentylene, which can optionally be substituted by phenyl, tolyl, ethylphenyl, xylyl, chlorophenyl, |

or by Y and/or the group

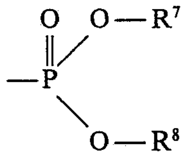

wherein Y, $R^7$ and $R^8$ have the abovementioned meaning,

in the presence of an acid.

2. Process according to Claim 1, characterised in that it is carried out in the presence of an aqueous proton acid.

3. Process according to Claims 1 and 2, characterised in that the concentration of acid in the reaction mixture is 5 to 90% by weight.

4. Process according to Claims 1 to 3, characterised in that the reaction is carried out in the temperature range form 50 to 200° C.

5. Use of benzimidazolyl-2-alkane-phosphonic acids and/or salts thereof according to Claim 1 in anti-corrosion agents.

6. Use of benzimidazolyl-2-alkane-phosphonic acids and/or salts thereof according to Claim 1 in wetting agents for the preparation of aqueous suspensions of pigments and fillers.

**Revendications pour les Etats contractants: BE, DE, FR, GB, IT, NL**

1. Acides benzimidazolyl-2-alcane-phosphoniques de formule

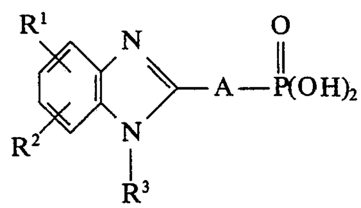

dans laquelle

| | |
|---|---|
| $R^1$ et $R^2$ | sont identiques ou différents et représentent de l'hydrogène, un alcoyle inférieur, phényle, halogène, trifluorométhyle, nitro, alcoxy inférieur ou forment ensemble un noyau benzénique condensé, |
| $R^3$ | représente de l'hydrogène, un alcoyle inférieur ou un phényle ou benzyle éventuellement substitué par un alcoyle inférieur ou de l'halogène, et |
| A | représente un radical hydrocarboné bivalent à chaîne droite ou ramifiée, saturé ou insaturé, ayant 1 à 15 atomes de carbone, un cyclohexylène ou un cyclopentylène, qui peuvent être éventuellement substitués par un phényle, tolyle, éthylphényle, xylyle, chlorophényle, carboxy et/ou phosphono, |

et leurs sels avec des bases et acides minéraux ou organiques.

2. Acides benzimidazolyl-2-alcane-phosphoniques selon la revendication 1, caractérisés par la formule:

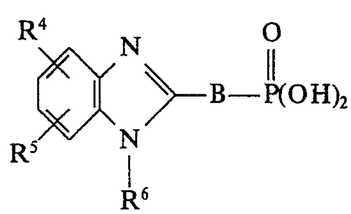

dans laquelle

| | |
|---|---|
| $R_4$ et $R^5$ | sont identiques ou différents et représentent de l'hydrogène, méthyle, chlore, méthoxy ou nitro, |
| $R^6$ | de l'hydrogène, méthyle, benzyle, phényle et |
| B | méthylène, éthylène, propylène, butylène, vinylène, phénylvinylène, carboxyéthylène, |

carboxypropylène, dicarboxypropylène, dicarboxybutylène, phosphonopropylène, phosphonobutylène, carboxyphosphonobutylène.

3. Procédé de fabrication d'acides benzimidazolyl-2-alcane-phosphoniques selon la revendication 1, caractérisé en ce qu'on fait réagir en présence d'un acide des o-arylène diamines de formule:

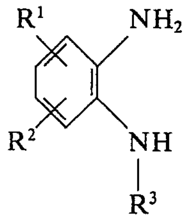

dans laquelle

$R^1$, $R^2$ $R^3$ ont la signification indiquée à la revendication 1,

avec des composés d'acides phosphonocarboxyliques de formule:

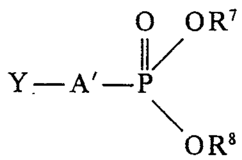

dans laquelle

| | |
|---|---|
| Y | représente un carboxy, carbalcoxy, carbophénoxy, cyano, carbamide ou carbochlorure, |
| $R^7$ et $R^8$ | sont identiques ou différents et représentent de l'hydrogène, un alcoyle inférieur ou un phényle, ou peuvent former ensemble un noyau par l'intermédiaire d'un pont éthylène ou propylène, et |
| A' | représente un radical hydrocarboné bivalent à chaîne droite ou ramifiée, saturé ou non saturé, ayant 1 à 15 atomes de carbone, un cyclohexylène ou un cyclopentylène, qui peuvent éventuellement être substitués par un phényle, tolyle, éthylphényle, xylyle, chlorophényle, par Y et/ou par le groupe |

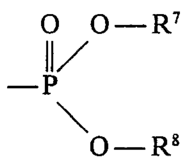

dans lequel Y, $R^7$ et $R^8$ ont la signification indiquée plus haut.

4. Procédé selon la revendication 3, caractérisé en ce qu'il est exécuté en présence d'un acide protonique aqueux.

5. Procédé selon les revendications 3 et 4, caractérisé en ce que la concentration en acide dans le mélange de réaction s'élève à 5—90% en poids.

6. Procédé selon les revendications 3 à 5, caractérisé en ce que la réaction est exécutée dans l'intervalle de température de 50 à 200° C.

7. Agent protecteur contre la corrosion, contenant des acides benzimidazolyl-2-alcane-phosphoniques et/ou leurs sels selon la revendication 1.

8. Agent mouillant pour la fabrication de suspensions aqueuses de pigments et de matières de charge, contenant des acides benzimidazolyl-2-alcane-phosphoniques et/ou leurs sels selon la revendication 1.

9. Utilisation des acides benzimidazolyl-2-alcane-phosphoniques et/ou de leurs sels selon la revendication 1 dans des agents de protection contre la corrosion.

10. Utilisation des acides benzimidazolyl-2-alcane-phosphoniques et/ou de leurs sels selon la revendication 1 dans des agents mouillants pour la fabrication de suspensions aqueuses de pigments et de matières de charge.

**Revendications pour l'Etat contractant: AT**

1. Procédé de fabrication d'acides benzimidazolyl-2-alcane-phosphoniquies de formule

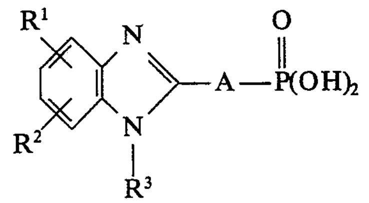

dans laquelle

| | |
|---|---|
| $R^1$ et $R^2$ | sont identiques ou différents et représentent de l'hydrogène, un alcoyle inférieur, phényle, halogène, trifluorométhyle, nitro, alcoxy inférieur ou forment ensemble un noyau benzénique condensé, |
| $R^3$ | représente de l'hydrogène, un alcoyle inférieur ou un phényle ou benzyle éventuellement substitué par un alcoyle inférieur ou de l'halogène, et |
| A | représente un radical hydrocarboné bivalent à chaîne droite ou ramifiée, saturé ou insaturé, ayant 1 à 15 atomes de carbone, un cyclohexylène ou un cyclopentylène, qui peuvent être éventuellement substitués par un phényle, tolyle, éthylphényle, xylyle, chlorophényle, carboxy et/ou phosphono, |

ou leurs sels avec des bases et acides minéraux ou organiques, caractérisé en ce qu'on fait réagir en présence d'un acide des o-arylène diamines de formule:

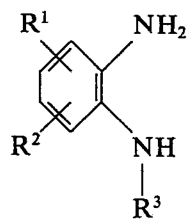

dans laquelle

$R^1$, $R^2$ $R^3$ ont la signification indiquée plus haut,

avec des composés d'acides phosphonocarboxyliques de formule:

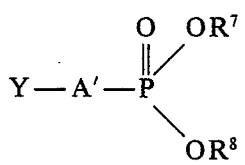

dans laquelle

| | |
|---|---|
| Y | représente un carboxy, carbalcoxy, carbophénoxy, cyano, carbamide ou carbochlorure, |
| $R^7$ et $R^8$ | sont identiques ou différents et représentent de l'hydrogène, un alcoyle inférieur ou un phényle, ou peuvent former ensemble un noyau par l'intermédiaire d'un pont éthylène ou propylène, et |
| A' | représente un radical hydrocarbone bivalent à chaîne droite ou ramifiée, saturé ou non saturé, ayant 1 à 15 atomes de carbone, un cyclohexylène ou un cyclopentylène, qui peuvent éventuellment être substitués par un phényle, tolyle, éthylphényle, xylyle, chlorophényle, |

par Y et/ou par le groupe

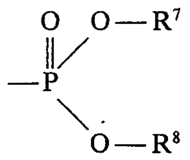

dans lequel Y, $R^7$ et $R^8$ ont la signification indiquée plus haut.

2. Procédé selon la revendication 1, caractérisé en ce qu'il est exécuté en présence d'un acide protonique aqueux.
3. Procédé selon les revendications 1 et 2, caractérisé en ce que la concentration en acide dans le mélange de réaction s'élève à 5 – 90% en poids.
4. Procédé selon les revendications 1 à 3, caractérisé en ce que la réaction est exécutée dans l'intervalle de température de 50 à 200° C.
5. Utilisation des acides benzimidazolyl-2-alcane-phosphoniques et/ou de leurs sels selon la revendication 1 dans des agents de protection contre la corrosion.
6. Utilisation des acides benzimidazolyl-2-alcane-phosphoniques et/ou de leurs sels selon la revendication 1 dans des agents mouillants pour la fabrication de suspensions aqueuses de pigments et de matières de charge.